# EUROPEAN PATENT SPECIFICATION

(11) **EP 1 787 774 B1**
(45) Date of publication and mention of the grant of the patent: **07.04.2010**
(21) Application number: 07101639.8
(22) Date of filing: 15.02.1999
(51) Int. Cl.: B27B 5/22, B27B 27/02, B23D 47/02, B27B 27/08

(54) **Mitre gauge**
Gehrungslehre
Calibre à onglet

(30) Priority: 13.02.1998 US 74706 P
(43) Date of publication of application: 23.05.2007
(62) Divisional of application: 05011181.4
(73) Proprietor: Black & Decker, Inc., Newark, DE 19711 (US)
(72) Inventor: Parks, James R, 06070, San Martino in Colle (IT); Livingston, Scott, Catonsville, MD 21228 (US); Huston, Todd, Lutherville, MD 21093 (US); O'Banion, Michael, Westminster, MD 21157 (US); Gehret, Robert, Hampstead, MD 21074 (US); Welsh, Robert S, Hunt Valley, MD 21030 (US); Zehr, Edwin G, Taneytown, MD 21787 (US); Taylor, William Scott, Glen Rock, PA 17327 (US); Stropkay, Scott, Carlisle, MA 01741 (US); Weissburg, David Louis, Cambridge, MA 02138 (US); Rohr, Lewis Hampton, Fayetteville, NC 28304 (US); Eichelberger, Paul, Landisville, PA 17538 (US); Nichols, Mark Allen, Cambridge, MA 02140 (US); Tew, Henry Lewis, Fayetteville, NC 28301 (US); Duncanson, David E, W Newbury, MA 01985 (US); Stumpf, William R, Kingsville, MD 21087 (US); Paladino, Thomas S, Naperville, IL 60565 (US); Holleman, Jerry W, Apex, NC 27502 (US); Ayala, Adan, Baltimore, MD 21212 (US)
(74) Representative: Bell, Ian Stephen

(56) References cited:
- US-A- 1 985 614
- US-A- 5 038 486

## Description

This invention relates generally to a mitre gauge according to the preamble of claim 1, which is known from US 1985614.

Generally, a table saw for cutting work pieces has a circular saw table for supporting a circular saw, on one side of which a mitre table having a mitre gauge for guiding a workpiece to be cut is provided, and on the other side of which a supplementary table for supporting the workpiece to be cut is provided. A fence for determining the cutting width of the workpiece is also provided in the table saw.

Causes of undesirable inaccurate cuts reside in the accessories used on table saws. For example, most mitre gauges have primitive detent systems which rely on two elements coming into contact. However, because of the design and/or construction, these mitre gauges have a certain amount of "play." Accordingly, while a mitre gauge may read an angle of 30°, because of the play involved between the elements, the actual angle may be off by several degrees. Again, this discrepancy between the reading and the actual angle causes inaccurate cuts.

Similarly, fences sliding along parallel rails are common in the prior art. However, because of the materials, design and/or construction of the fences and/or rails, the fences do not lock consistently parallel to the blade, requiring carefully adjustment and wasting operator time. Other fences change their positions during the locking operation. This forces the user to adjust the lock the fence multiple times until the fence is properly positioned, again wasting operator time. Otherwise, they would cause inaccurate cuts.

Examples of mitre gauges of the prior art which demonstrate some of the problems set out above are disclosed in US5038486 and US1985614.

According to the present invention, there is provided a mitre gauge comprising the features of claim 1.

Additional features and benefits of the present invention are described, and will be apparent from, the accompanying drawings and the detailed description below.

The accompanying drawings illustrate preferred embodiments of the invention according to the practical application of the principles thereof, and in which:
FIG. 1 is a front elevational view of an exemplary table saw ;
FIG. 2 is a cross-sectional view of the table saw of FIG. 1 along line II-II;
FIG. 3 is a partial front perspective view of a cross-cut table assembly and a mitre gauge assembly of the table saw of FIG. 1;
FIG. 4 is a partial cross-sectional view of the mitre gauge assembly of FIG. 3 along line IX-IX;
FIG. 5 is a partial exploded view of the mitre gauge assembly of FIG. 3;
FIG. 6 is a partial exploded view of a pin assembly of the mitre gauge assembly of FIG. 3;
FIG. 7A is a partial cross-sectional view of the mitre gauge assembly of FIG. 3 along line XII-XII as shown in FIG. 4;
FIG. 7B is a partial cross-sectional view along line XII-XII as shown in FIG. 7A;

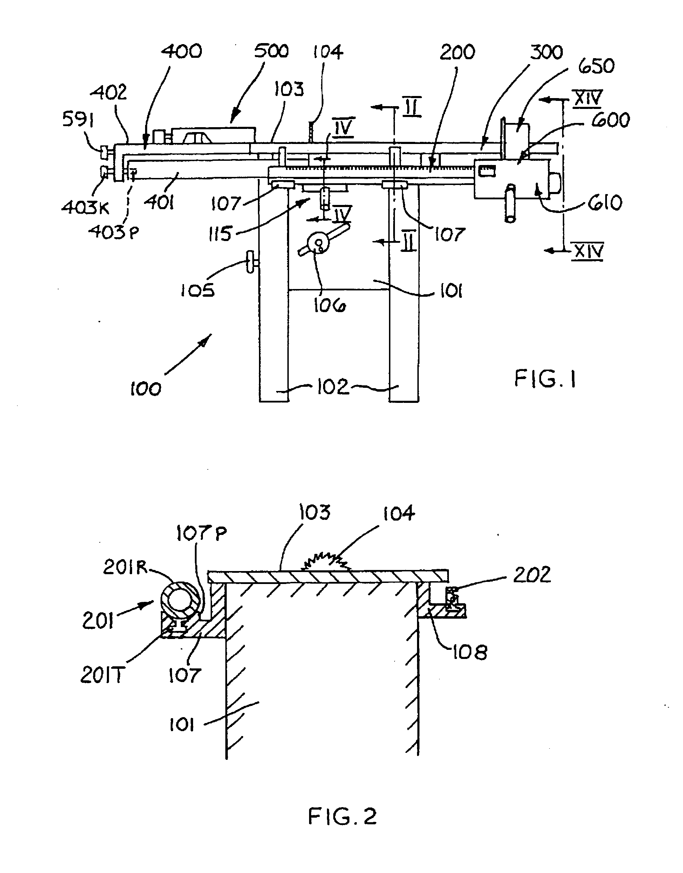

The invention is now described with reference to the accompanying figures, wherein like numerals designate like parts. Referring to FIG. 1, an exemplary table saw may have the following major components: a base assembly 100 which includes a sliding rail assembly 200 slidably connected to the base assembly 100, a sliding table 300 connected to the sliding rail assembly 200, a cross-cut table assembly 400, a mitre gauge assembly 500 and a fence assembly 600 slidably disposed on the sliding rail assembly 200.

The base assembly 100 may have a table 103, legs 102 connected to and supporting the table 103 and panels 101 connected to the legs 102. Inside the base assembly 100, a blade assembly (not shown) may be disposed in such manner that a blade 104 protrudes through a slot in the table 103. Preferably, the blade 104 is offset from the centre of table 103. In this manner, rip capacity has been effectively increased without increasing the envelope of table 103.

A bevel crank 105 may be provided in order to adjust the angular position of the blade assembly and thus of the blade 104 relative to the table 103. Similarly, a height crank 106 may be provided in order to adjust the vertical position of the blade assembly and thus the height of the blade 104 relative to the table 103.

As mentioned above, the sliding rail assembly 200 is slidably connected to the base assembly 100. Referring to FIGS. 1 and 2, the sliding rail assembly 200 may include a front rail 201 and a rear rail 202. As seen in FIG. 2, the front rail 201 may have a upper round section 201 R and a lower inverted-T rail 201T fixedly attached to the upper section 201 R and preferably extending throughout most of the length, if not the entire length, of the front rail 201.

The lower rail 201T is slidably received by at least one front rail bracket 107, which may be in turn fixedly attached to the table 103. Thus, the front rail bracket 107 slidably supports the front rail 201. As shown in FIG. 2, the front rail bracket 107 has upwardly protrusions 107P that contact front rail 201. The two-point contact between the bracket 107 and the front rail 201 ensure alignment.

The rear rail 202, preferably made of extruded aluminium, may be slidably received by at least one rear rail bracket 108, which may be in turn fixedly attached to the table 103.

Referring to FIG. 1, a locking cam assembly 115 may be used in order to lock the sliding rail assembly 200 and/or the sliding table 300 in the desired position

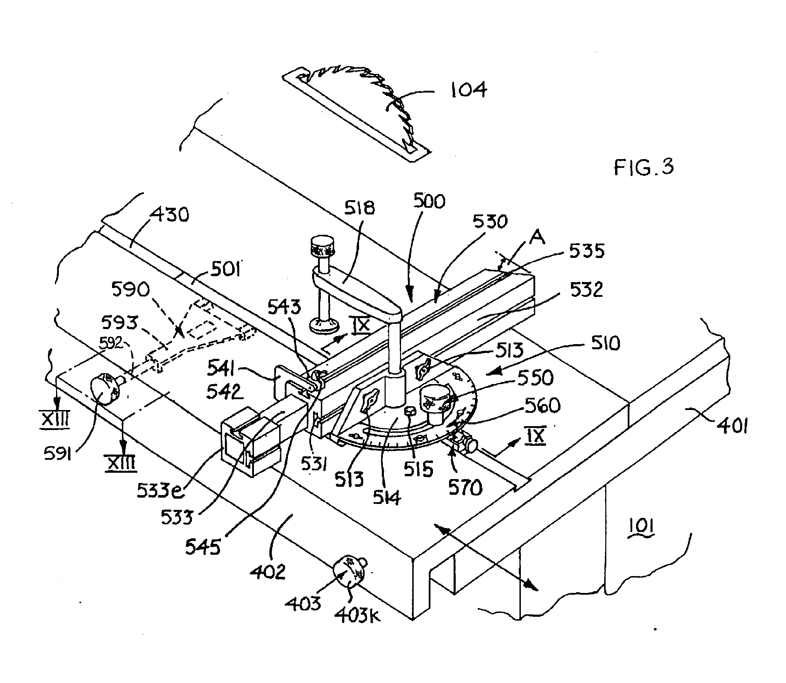

A cross-cut table assembly 400 is also provided. Referring to FIGS. 1 and 3, the cross-cut table assembly 400 may include two auxiliary rails 401 fixedly attached to the base 101 or table 103 via screws. The cross-cut table assembly 400 may also include a sliding cross-cut table 402 slidably disposed on the auxiliary rails 401. The cross-cut table 402 slides towards the front and/or the rear of the table saw, i.e., in a direction parallel to the plane which the blade 104 resides therein.

Preferably, the top surface of table 402 is coplanar with or slightly above the top surface of table 103. Accordingly, it is also preferable to provide a means for adjusting the height of the table 402.

A user may also desire to adjust the horizontal position of table 402 relative to table 103 and/or the direction in which the table 402 slides along.

A cross-cut table lock assembly 403 may also be provided on table 402. Basically, as shown in FIGS. 1 and 3, the lock assembly 403 includes a knob 403k, and a pin 403p connected to the knob 403k and extending through the table 402.

A mitre gauge assembly 500 is also provided. Referring to FIGS. 3 and 4-7, table 402 has a mitre groove 430, preferably parallel to the blade 104. (Persons skilled in the art, will recognize that such mitre groove 430 may also be disposed on table 103 or sliding table 300.) The mitre gauge assembly 500 has a guide bar 501 disposed on the groove 430, a mitre head assembly 510 rotatably attached to the guide bar 501, and a fence assembly 530 slidably attached to the mitre head assembly 510.

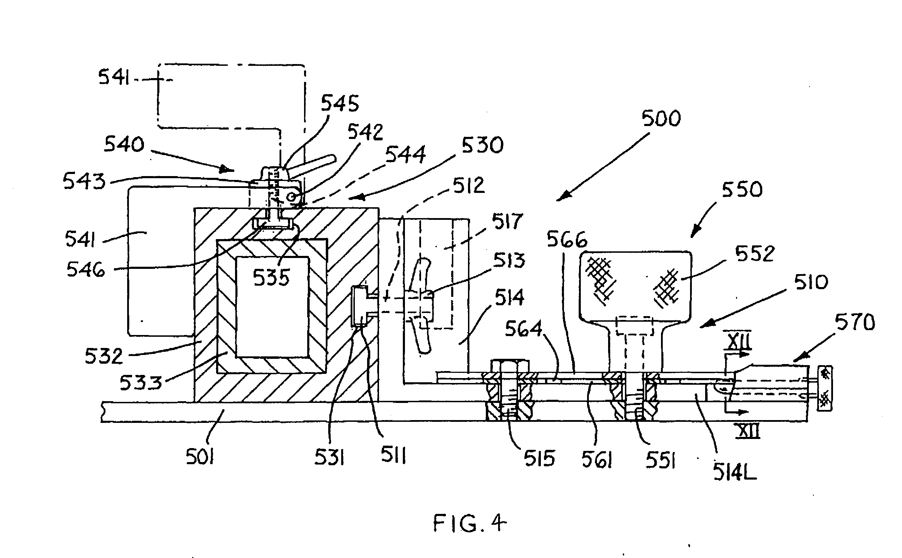

As shown in FIGS. 3 and 4, the fence assembly 530 may have a channel 531 provided within to hold a T-nut or sliding strip 511. The nut or strip 511 threadingly engages a bolt 512, which is preferable insert-moulded in knob 513, for securing the fence assembly 530 in place against the mitre head assembly 510. Accordingly, a user may slide the fence assembly 530 relative to the mitre head assembly 510 and lock the fence assembly 530 in place by twisting the knob 513. Persons skilled in the art will recognize that a cam lock or overcenter mechanism, such as the one described below, may be used instead to secure the fence assembly 530 in place. In addition, persons skilled in the art will recognize that the strip 511 may be long enough to receive all bolts 512.

The fence assembly 530 may also have an outer rail 532. The outer rail 532 may be constructed of extruded aluminium and may have a rectangular top plan. However, it is preferable to cut off or machine the end of the outer rail 532 closest to the blade so that the end is at an angle A relative to the original end (see FIG. 3). In this manner, when conducting a mitring operation, the outer rail 532 may be closely disposed to the blade 104, while providing support to the workpiece.

The fence assembly 530 may also have an inner rail 533 telescoping within the outer rail 532. The inner rail 533 may have at its non-telescoping distal end 533e the same cross-section as the outer rail 532 in order to maintain the same overall fence profile.

The fence assembly 530 may also have a flip-down stop assembly 540, which can be pivoted downwards to stop a workpiece (not shown). The stop assembly 540 may have a flip stop 541 which may be pivoted about a pin 542 between two positions: a first raised position, where the flip stop 541 is above the fence assembly 530 and not contacting a workpiece, and a second lowered position, where part of the flip stop 541 is below the top surface of fence assembly 530 and contacting a workpiece.

Stop assembly 540 may also have a main housing 543, a bolt 544 extending therethrough and insert-moulded in a knob 545, and a T-nut or sliding strip 546 threadingly engaging the bolt 544. The nut or strip 546 is slidingly received in channel 535 (in fence assembly 530), so that the entire stop assembly 540 may be slid throughout the length of the channel 535. Accordingly, a user may slide the stop assembly 540 relative to the fence assembly 530 and lock the stop assembly 540 in place by twisting the knob 545. Persons skilled in the art will recognize that a cam lock or overcenter mechanism may be used instead to secure the stop assembly 540 in place.

As mentioned above, the mitre head assembly 510 is rotatably attached to the guide bar 501. Referring to FIGS. 3 and 4-5, the mitre head assembly 510 may have a main body 514 rotatably disposed above and rotatably attached to the guide bar 501 by a bolt 515, a mitre head lock assembly 550 for locking the main body 514 in the desired rotational position, a mitre detent/scale mechanism 560 and a latch assembly 570.

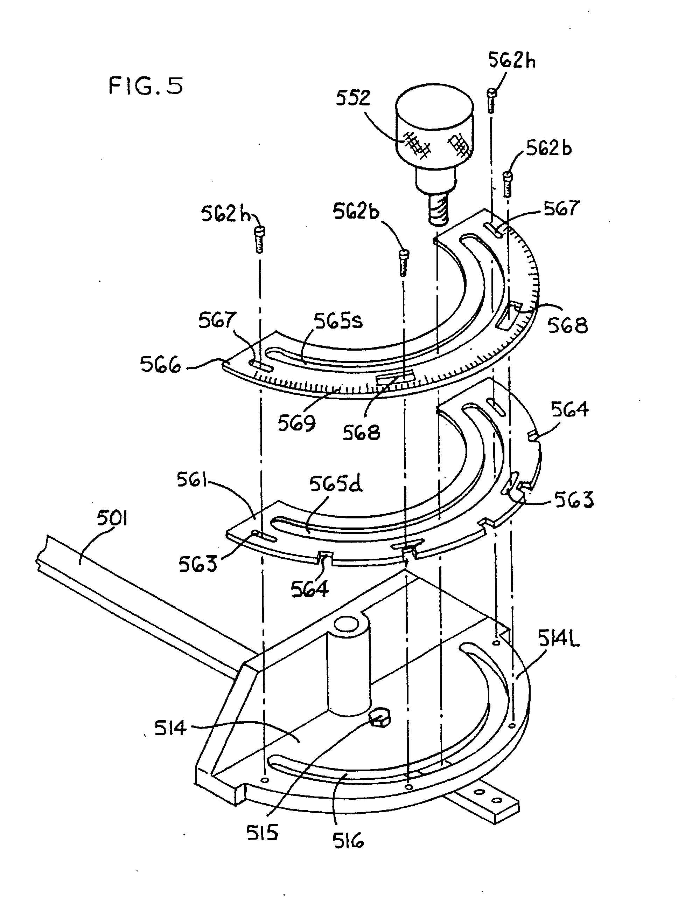

The mitre head lock assembly 550 may comprise a knob 552, and a bolt 551, preferably insert-moulded in knob 552, threadingly engaging the guide bar 501. A seen in FIG. 5, the main body 514 has a slot 516 that allows rotational movement of the main body 514 relative to the guide bar 501 without interference from bolt 551. Accordingly, a user may pivot the main body 514 relative to guide bar 501 about bolt 515. The user may then lock the main body 514 in place by twisting the knob 552. Persons skilled in the art will recognize that a cam lock or overcenter mechanism may be used instead to secure the main body 514 in place.

Another aspect of the invention is the novel detent mechanism that is comprised by the mitre detent/scale mechanism 560 disposed on the main body 514 and the latch assembly 570 disposed on the guide bar 501. The advantage of this detent mechanism will be explained below.

Referring to FIGS. 3 and 4-5, the mitre detent/scale mechanism 560 may include a semi-circular mitre detent plate 561, preferably made of steel or stainless steel, slidingly disposed on the main body 514. The detent plate 561 is held on the main body 514 by a set of screws 562h and 562b. A set of corresponding slots 563 is provided on the detent plate 561 so that a user can slide the detent plate 561 relative to the main body 514 along the slots 563. The detent plate 561 also has notches 564 disposed at the outer edge of the detent plate 561. These notches 564 are disposed at select locations of the detent plate 561. A semi-circular slot 565d is also provided in order to allow rotational movement of the main body 514 relative to the guide bar 501. Persons skilled in the art will note that the detent plate 561 preferably extends beyond the lip 514L of main body 514.

A semi-circular scale plate 566, preferably made of steel or stainless steel, is slidingly disposed on the detent plate 561. As seen in FIG. 5, a scale 569 may be provided on the scale plate 566 to indicate, in conjunction with pointer 558 (see below), the rotational position of the main body 514 relative to the guide bar 501. In addition, a semi-circular slot 565s is provided in order to allow rotational movement of the main body 514 relative to the guide bar 501. In addition, the scale plate 566 may be held in place by the screws 562h. The scale plate 566 may have a set of slots 567, which correspond to screws 562h. These slots 567 allow the user to slide the scale plate 566 relative to main body 514 and/or the detent plate 561.

The scale plate 566 may also have a second set of oversized slots 568, which completely bypass the screws 562b. Accordingly, the screws 562b do not contact or hold the scale plate 566. These slots 568 allow the user to adjust the scale plate 566 relative to main body 514 and/or the detent plate 561 without adjusting the detent plate 561.

Referring to FIGS. 3, 4 and 6-7, the latch assembly 570 is fixedly attached to guide bar 501 via screws 571, through holes 571H. Holes 571H may be oversized holes or slots, allowing rotational or sideways movement of the latch assembly 570. The latch assembly 570 may have a lower body 572, and a upper body 573 fixedly attached to the lower body 572 via screws 574. The upper body 573 has a pointer 558 disposed thereon that, in conjunction with scale plate 566, indicate the rotational position of the main body 514 relative to the guide bar 501.

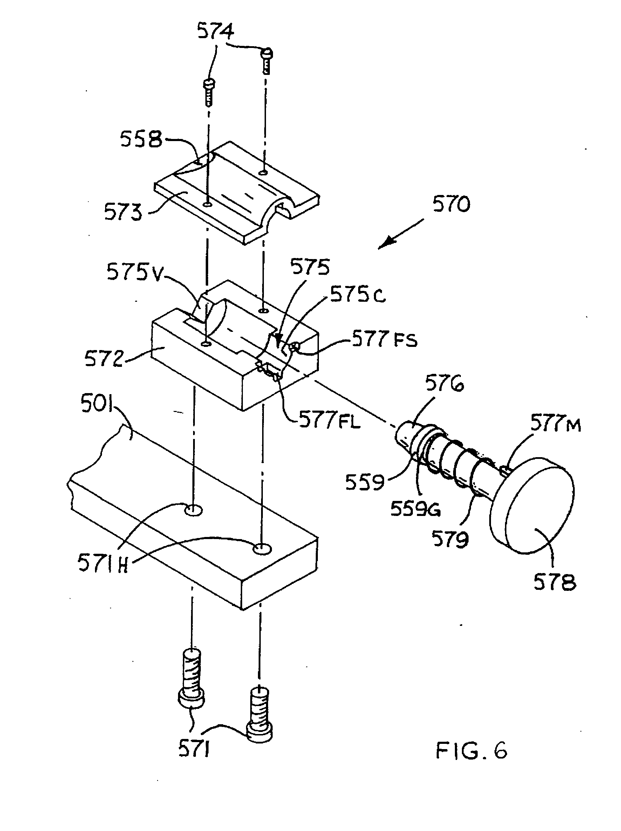

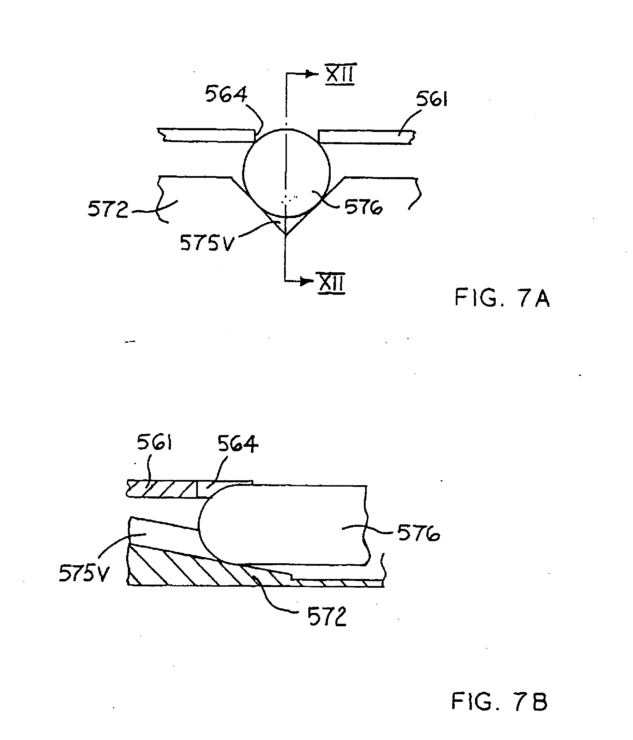

As shown in FIGS. 6 and 7, the lower body 572 and upper body 573 create a central channel 575 which slidingly receives a pin 576. The pin 576 is connected to a knob 578, so that a user can slide the pin 576 in and out of channel 575. The channel 575 may have a cylindrical profile 575c at the rear end of the channel 575, i.e., towards the knob 578. The channel 575 may also have a front V-shaped lower profile 575v at the front end of the channel 575. The channel 575 may have a semicylindrical profile or flat profile above the V-shaped lower profile 575v. Preferably the portion 575v is upwardly slanted at the end closest to the detent plate 561, as shown in FIG. 7B. This slant forces the pin 576 towards notch 564, as explained below.

In addition, a spring 579 may be connected between the pin 576 and a holder 559, normally biasing the pin 576 towards a extended position, i.e., extending beyond the front of the latch assembly 570. The holder 559 is preferably disposed on a groove 559G on the pin 576.

A detent 577M may also be provided on the pin 576. The detent 577M engages a long detent notch 577FL or a short detent notch 577FS. If the detent 577M engages the long detent notch 577FL, the pin 576 can slide in and out of channel 575 and is normally biased towards the extended position. If a user pulls out and rotates the pin 576 preferably about 90° so that the detent 577M engages the short detent notch 577FS, the pin 576 is held in a retracted position until the user rotates the pin 576 in the opposite direction and reengages the detent 577M with the long detent notch 577FL.

As shown in FIG. 4 and 7, the pin 576 may engage a notch 564 of detent plate 561. It is thus beneficial to place, or "program", the notches 564 on the detent plate 561 to correspond with commonly desired mitre angles, i.e., the angles between the main body 514 and the guide bar 501. Such commonly desired angles include 0°, 22.5°, 45°, -22.5°, -45°, etc., where 0° is when the fence assembly 530 connected to the main body 514 is substantially perpendicular to the guide bar 501. Accordingly, if the user wants to quickly and accurately find the 0° angle, the user need only to pull out the pin 576, move the main body 514 towards the 0° angle as indicated by scale 569 in conjunction with pointer 558, and to let go of the pin 576. Because the pin 576 is normally biased towards the extended position, the user can continue moving the main body 514 towards the 0° angle until the pin 576 engages the corresponding 0° angle notch 564.

Contrary to some prior art mitre gauge detent mechanism, the mechanism described above minimizes the "play" in the pin, providing a more accurate angle setting. This is achieved by limiting the number of lines of contact, or "contact lines", between the detent plate 561 and pin 576 and between the lower body 572 and pin 576. The total number of contact lines between detent plate 561, lower body 572 and pin 576 is preferably between 3 and 10. Because of the limited number of contact lines, a "tighter" contact with less play can be obtained. As shown in FIG. 7, the pin 576 is contacted in 4 different lines by the detent plate 561 and the channel 575v. This limits the range of movement, or "play", that the pin 576 may otherwise have.

The main body 514 may also have a channel 517 for receiving a clamp 518 as is known in the art. Also, persons skilled in the art will recognize that bolt 515 may be placed underneath channel 517.

Referring to FIG. 3, the table saw may also have a mitre gauge lock assembly 590, which is used to lock the position of the mitre gauge assembly 500 along the groove 430, so that a user need only to move the cross-cut table 402 in order to make rip cuts. The mitre gauge lock assembly 590 may have a knob 591 connected to a screw 592. The screw 592 engages threads disposed within table 402, converting the rotational movement of the knob 591 into linear movement along the longitudinal axis of screw 592. The screw 592 contacts lock plate 593.

As shown in FIG. 1, the table saw may have a fence assembly 600 slidably disposed on the rail assembly 200. The new fence 600 has two main elements: the fence head assembly 610 and the fence beam assembly 650. The fence head assembly 610 is slidably connected to the rail assembly 200, and is connected to the fence beam assembly 650.

## Claims

1. A mitre gauge (500) comprising:
a guide bar (501);
a mitre head assembly (510) rotatably attached to the guide bar;
a detent plate (561) slidably attached to the mitre head; and
a latch assembly (570) attached to the guide bar, the latch assembly comprising a channel (575), and a slidable pin (576) sliding along the channel and engaging the detent plate, **characterised by** lines of contact between the detent plate and the pin and between the channel and the pin, wherein the total number of lines of contact is between 3 and 10.

2. A mitre gauge according to claim 1, wherein the total number of lines of contact between the detent plate and the pin and between the channel and the pin is 4.

3. A mitre gauge according to claim 1 or 2, wherein the channel is slanted towards the detent plate.

4. A mitre gauge according to any one of the preceding claims, wherein:
the guide bar has an end;
the head assembly comprises at least one detent notch (564) which is preferably disposed on the detent plate that is slidably attached to the head assembly; and
the latch assembly is disposed at the guide bar end for engaging the detent notch, the latch assembly comprising a movable button (578) having a tab for engaging the detent notch, the button being movable between a first position towards the guide bar end and engaging the detent notch, and a second position away from the guide bar end and disengaging the detent notch.

5. A mitre gauge according to claim 4, wherein the latch assembly further comprises a spring (579) biasing the button towards the first position.

## Patentansprüche

1. Gehrungslehre (500) mit
einer Führungsstange (501),
einer Gehrungskopfanordnung (510), die drehbar an der Führungsstange angeordnet ist,
einer Rastplatte (561), die verschiebbar an dem Gehrungskopf (510) angeordnet ist, und
einer Verriegelungsanordnung (570), die an der Führungsstange angebracht ist, wobei die Verriegelungsanordnung eine Rille (575) und einen verschiebbaren Stift (576) aufweist, der sich entlang der Rille verschiebt und mit der Rastplatte in Eingriff kommt, **gekennzeichnet durch** Kontaktlinien zwischen der Rastplatte und dem Stift und zwischen der Rille und dem Stift, wobei die Gesamtzahl der Kontaktlinien zwischen 3 und 10 liegt.

2. Gehrungslehre nach Anspruch 1, wobei die Gesamtzahl der Kontaktlinien zwischen der Rastplatte und dem Stift und zwischen der Rille und dem Stift 4 ist.

3. Gehrungslehre nach Anspruch 1 oder 2, wobei die Rille zu der Rastplatte geneigt ist.

4. Gehrungslehre nach einem der vorhergehenden Ansprüche, wobei
die Führungsstange ein Ende hat,
die Kopfanordnung wenigstens eine Rastvertiefung (564) aufweist, die vorzugsweise an der Rastplatte, die verschiebbar an der Kopfanordnung angeordnet ist, angeordnet ist, und
die Verriegelungsanordnung an dem Ende der Führungsstange angeordnet ist, um mit der Rastvertiefung einzugreifen, wobei die Verriegelungsanordnung einen beweglichen Knopf (578) mit einem Vorsprung zum Eingriff mit der Rastvertiefung hat, wobei der Knopf zwischen einer ersten Stellung hin zu der Führungsstange und zum Eingriff mit der Rastvertiefung und einer zweiten Stellung weg von der Führungsstange und zum Lösen von der Rastvertiefung beweglich ist.

5. Gehrungslehre nach Anspruch 4, wobei die Verriegelungsanordnung ferner eine Feder (579) aufweist, die den Knopf in die erste Stellung vorspannt.

## Revendications

1. Calibre d'onglet (500) comprenant :
➢ une barre de guidage (501) ;
➢ un ensemble de tête d'onglet (510) fixé à rotation sur la barre de guidage ;
➢ une plaque d'encliquetage (561) fixée de façon coulissante sur la tête d'onglet ; et
➢ un ensemble de verrou (570) fixé sur la barre de guidage, l'ensemble de verrou comprenant un canal (575), et une broche coulissante (576) qui coulisse le long du canal et qui vient en prise avec la plaque d'encliquetage, **caractérisé par** des lignes de contact entre la plaque d'encliquetage et la broche et entre le canal et la broche, dans lequel le nombre total de lignes de contact se situe entre 3 et 10.

2. Calibre d'onglet selon la revendication 1, dans lequel le nombre total de lignes de contact entre la plaque d'encliquetage et la broche et entre le canal et la broche est égal à 4.

3. Calibre d'onglet selon la revendication 1 ou la revendication 2, dans lequel le canal est incliné vers la plaque d'encliquetage.

4. Calibre d'onglet selon l'une quelconque des revendications précédentes, dans lequel :
➢ la barre de guidage présente une extrémité ;
➢ l'ensemble de tête comprend au moins une encoche d'encliquetage (564) qui est disposée de préférence sur la plaque d'encliquetage qui est fixée de façon coulissante sur l'ensemble de tête ; et
➢ l'ensemble de verrou est disposé au niveau de l'extrémité de la barre de guidage de façon à venir en prise avec encoche d'encliquetage, l'ensemble de verrou comprenant un bouton mobile (578) qui présente une patte destinée à venir en prise avec l'encoche d'encliquetage, le bouton étant mobile entre une première position vers l'extrémité de la barre de guidage et en venant en prise avec l'encoche d'encliquetage, et une seconde position en allant en s'éloignant de l'extrémité de la barre de guidage et en se dégageant de l'encoche d'encliquetage.

5. Calibre d'onglet selon la revendication 4, dans lequel l'ensemble de verrou comprend en outre un ressort (579) qui pousse le bouton vers la première position.
